## Europäisches Patentamt
## European Patent Office
## Office européen des brevets

(11) Veröffentlichungsnummer: **0 205 445**
**B1**

(12) **EUROPÄISCHE PATENTSCHRIFT**

(45) Veröffentlichungstag der Patentschrift:
18.10.89

(51) Int. Cl.⁴: **B 60 P 3/34**

(21) Anmeldenummer: 85901385.6

(22) Anmeldetag: 11.04.85

(86) Internationale Anmeldenummer:
PCT/DE 85/00116

(87) Internationale Veröffentlichungsnummer:
WO 85/04625 (24.10.85 Gazette 85/23)

(54) TRANSPORTABLE UNTERKUNFT.

(30) Priorität: 12.04.84 DE 3414013

(43) Veröffentlichungstag der Anmeldung:
30.12.86 Patentblatt 86/52

(45) Bekanntmachung des Hinweises auf die Patenterteilung:
18.10.89 Patentblatt 89/42

(84) Benannte Vertragsstaaten:
AT BE CH DE FR GB IT LI NL SE

(56) Entgegenhaltungen:
DE-A- 2 719 293
GB-A- 1 043 975
US-A- 3 484 131

(73) Patentinhaber: KUTZNER, Jürgen, Alsenstrasse 26b,
D-1000 Berlin 39 (DE)

(72) Erfinder: KUTZNER, Jürgen, Alsenstrasse 26b,
D-1000 Berlin 39 (DE)

(74) Vertreter: Christiansen, Henning, Dipl.-Ing.,
Patentanwalt CHRISTIANSEN Pacelliallee 43/45,
D-1000 Berlin 33 (DE)

## Beschreibung

Die Erfindung betrifft eine Unterkunft der im Oberbegriff des Anspruchs 1 angegebenen Art.

Es ist bereits bekannt, in einem Reiseomnibus mit Mittelgang und beiderseits dieses Mittelganges angeordneten Sitzreihen unter Verwendung der Sitzpolster in zwei übereinanderliegenden Ebenen Liegeflächen für die Passagiere anzuordnen. Die Passagiere liegen zu zweit durch den Mittelgang und in diesem vorgezogenen Vorhänge getrennt in Fahrzeuglängsrichtung nebeneinander. (US-PS2 231 822). Diese Schlafkabineneinteilung bietet jedoch nur für eine geringe Anzahl von Passagieren Schlafgelegenheit.

Es ist auch bekannt, angrenzend an den Längsseiten eines Kastenwagens unter Verwendung von Seitenteilen des Kastenwagens Schlafkojen zu errichten, welche sich ausserhalb des Kastenwagens quer zur Wagenlängsachse erstrecken. Der Kastenwagen selbst dient dabei als Flur, von dem aus die Schlafkojen erreicht werden, und nimmt im übrigen Kleiderschränke auf (AT-PS 190 812). Bei Reisen, auf denen jede Nacht in einem anderen Ort zugebracht wird, ist es jedoch zeitraubend und umständlich, jeden Abend außerhalb des Kastenwagens und angrenzend an diesen die Kabinenbauten zu errichten, in diesen die Betten unterzubringen und am nächsten Morgen die Betten wieder innerhalb des Kastenwagens zu verstauen und die Kabinenbauten abzubrechen.

Aus der DE-A-2 719 293 ist eine transportable Unterkunft bekannt, bei der die Abmaße für den Transport dadurch verringert werden können, daß die Betten in den Gangbereich hineingeschoben werden können, der diesen Betten unmittelbar zugeordnet ist, d.h. zum Erreichen der betreffenden Betten betreten werden muß. Bei Kaskadierung einer derartigen Anordnung besteht das Problem, daß die tragende Geamtstruktur der Unterkunft auch insgesamt verkürzt bzw. verlängert werden muß, so daß keine durchgehenden Tragelemente Verwendung finden können und damit der konstruktive Aufwand wesentlich heraufgesetzt ist bzw. eine Ausführung in einer für Fahrzeuge anzustrebenden Leichtbaukonstruktion gar nicht möglich ist.

Weiterhin ist aus der GB-PS 1 043 975 ein Schlafkabinenanhänger bekannt, bei dem die beiden Längswände mit den entsprechenden Seitenbegrenzungen schubladenartig um jeweils maximal eine halbe Wagenbreite ausziehbar sind. Die Betten sind parallel zur Längsachse des Wagens doppelreihig in der Wagenmitte sowie einreihig entlang der Längswände angeordnet, so daß in der verkleinerten Transportkonfiguration vier Betten direkt nebeneinander angeordnet sind. Im vergrößerten Zustand erstrecken sich zwei Flure in Längsrichtung durch den Wagen. Auch diese Schlafkabineneinteilung bietet nur einer geringen Zahl von Passagieren Schlafgelegenheit.

Der Erfindung liegt die Aufgabe zugrunde, eine Unterkunft der eingangs angegebenen Gattung zu schaffen, die bei geringem konstruktiven Aufwand eine hohe Eigenfestigkeit aufweist und dem Benutzer einen jeweils von der benachbarten Kabine getrennten Zugang zum Bett schafft.

Diese Aufgabe wird nach der Erfindung durch die im Anspruch 1 angegebenen Maßnahmen gelöst.

Bei vorteilhaften Weiterbildungen der Erfindung ist jeweils ein Kabinenelement so weit herausziehbar ausgebildet, bis das innenliegende Ende des Kabinenelements über der Unterkunftslängsachse gelegen ist und das äußere Ende somit seitlich relativ weit herausragt. Es muß aber nicht der gesamten Länge des Bettes innerhalb der Kabine ein Gangbereich benachbart sein. Es ist vielmehr ausreichend, wenn der Zugang zum Bett innerhalb der Kontur der verkleinerten Unterkunft einen Gangbereich enthält. Der über diese Kontur ausziehbare Teil ist dagegen auf die Breite des Bettes begrenzt.

Die angegebene Lösung ermöglicht eine bessere Platzausnutzung, indem das Bett-Schrankelement wie eine Schublade gebaut ist und der Umkleidebereich zum einen nicht mehr mit ausziehbar ist, was zur Materialeinsparung auch durch Fortfall von aussteifenden Elementen führt, da die ausziehbaren Elemente insgesamt kleiner gehalten sind und daher eine vergrösserte Eigenstabilität aufweisen. Die Kabinenelemente werden bevorzugt nur noch zu einem Drittel herausgezogen, was eine einfache Konstruktion des Fahrzeugrahmens und unkomplizierte Abstützelemente zuläßt.

Bei bevorzugten Weiterbildungen der Erfindung ist am Ende des Gangbereichs ein Schrankelement vorgesehen, welches im zusammengeschobenen Zustand sich am Ende des Bettes des gegenüberliegenden Kabinenelements befindet, so daß in der Transportposition auch bei zusätzlicher Möblierung durch einen Schrank keine wesentliche Verbreiterung eintritt.

Die einander gegenüberliegenden Kabinenelemente sind günstigerweise bevorzugt gleichartig in der Weise aufgebaut, daß sie um 180° drehsymmetrisch sind und einander gegenüberliegend montiert, so daß gleichartige Bauelemente Verwendung finden können.

Bei der bevorzugten Ausführung erfolgt der Zugang zu den Kabinen von außen durch die im feststehenden Teil der Kabine befindliche Tür. Das gegenüberliegende Kabinenelement wird nur zu einem Drittel herausgezogen und braucht daher weniger komplizierte Abstützvorrichtungen. Der somit am Ende des Kabinenelementes entstehende Freiraum für das gegenüberliegende Kabinenelement dient zum Ein- und Aussteigen aus den bevorzugt als Schlafkojen ausgebildeten Betten (ein- oder doppelstöckig). Die zweistöckigen Betten können relativ schmal gehalten werden, denn die seitlichen Begrenzungen an Kopf- und Fußende der Betten durch das Schrankelement bzw. die seitliche Trennwand für den nach außen ragenden Teil des Kabinenelementes machen die Betten sicher gegen ein unbeabsichtigtes Herausfallen.

Durch diese relativ kleinen, und somit stabilen Elemente wird auch insgesamt eine höhere Festigkeit der gesamten Fahrzeugkonstruktion erreicht. Ein weiterer Vorteil besteht in den guten Führungsmöglichkeiten des schubladenartigen Elements.

Die Kabinen werden bevorzugt im Zusammenhang in fahrbarer Ausführung, insbesondere als Kraftfahrzeuganhänger, oder aber in Form von auf derartige Fahrzeuge aufsetzbaren Containern verwendet. Bei größeren Einheiten wird eine Queranordnung der Betten benutzt, während bei kleinen Wohnanhängern eine aus nur zwei Kabinenelementen bestehende Anordnung günstig ist, bei der die Betten in Fahrtrichtung angeordnet sind.

Bei Anhängern mit feststehender Deichsel läßt sich über dieser Deichsel wiederum mindestens ein Toiletten- oder Waschraum anordnen, dessen Volumen dadurch vergrößerbar ist, daß Wand- und/oder Deckenteile um einen in der Nähe der Deichselöse gelegenen Drehpunkt herausschwenkbar ist. Bei größeren Einheiten sind Waschräume nach demselben Prinzip wie die Schlafräume ineinander schiebbar vorzusehen, wobei dann sinngemäß das Zusammenschieben in der Weise erfolgt, daß feststehende Elemente der einen Kabine in Freiräume der anderen Kabine hineingeschoben werden — so also ein Waschbecken über einen Toilettensitz der gegenüberliegenden Kabine geschoben wird, etc.

Vorteilhafte Weiterbildungen der Erfindung sind in den Unteransprüchen gekennzeichnet bzw. werden anhand den nachstehenden Ausführungsbeispiele der Erfindung näher beschrieben. Es zeigen:

Fig. 1 ein erstes Ausführungsbeispiel der Erfindung als Grundriß und

Fig. 2 dasselbe Ausführungsbeispiel in perspektivischer Ansicht.

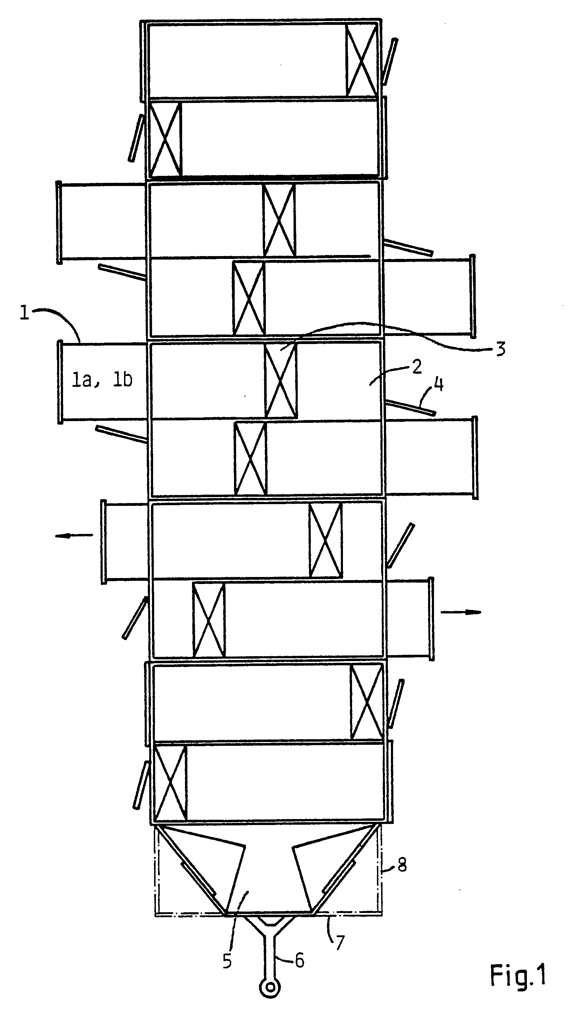

In Fig. 1 ist in Draufsicht ein gemäß der Erfindung konzipierter Fahrzeugaufbau eines Schlafanhängers für Reisebusse bzw. andere Zugmaschinen dargestellt. Quer zur Fahrzeuglängsachse sind Kabinenelemente angeordnet, die jeweils aus einem Bettenraum 1 mit zwei übereinanderliegenden Betten 1a und 1b und einem Schrank 3 am Fußende der Betten bestehen. Der Umkleideraum 2 entsteht beim Auseinanderziehen der Kabinenelemente, welche durch Türen 4 von außen zugänglich sind. Der Fahrzeugaufbau ist im ausgezogenen (vergrößerten) Zustand dargestellt. Die Kabinenelemente werden durch ausklappbare Stützen, die jedoch nicht näher dargestellt sind, in der ausgefahrenen Position unterstützt. Zum Zusammenschieben können Teleskopschienen oder Rollen verwendet werden, die ebenfalls nicht dargestellt sind. Der ausziehbare Teil 1, der das Bett aufnimmt, ist als «schubladenartiger Auszug» mit Dach ausgebildet, so dass er durch die insgesamt quaderförmige Gestaltung eine hohe Eigenstabilität aufweist.

Beim Zusammenschieben wird der Bettenraum des einen Kabinenelements in den Umkleidebereich des gegenüberliegenden Kabinenelements zurückgeschoben. Gleichzeitig werden die Stützen hochgeklappt. Dadurch verringert sich die Breite des Fahrzeugaufbaus auf das für Kraftfahrzeuganhänger zugelassene Maß.

Eine Waschkabine 5 mit Waschbecken (nicht dargestellt) ist auf der Deichsel 6 des Bus- oder Zugmaschinenanhängers angeordnet. Die Seitenteile 7 und 8 der Waschkabine sind schwenkbar angeordnet, um den verfügbaren Raum zu vergrößern.

Durch den Fahrzeugaufbau nach der Erfindung wird erreicht, daß für die Passagiere in der Nacht so viel Raum wie möglich zur Verfügung steht und daß die Fahrzeugbreite während der Fahrt die normale Breite eines Bus- oder Zugmaschinenanhängers nicht übersteigt. Der Fahrzeugaufbau ist leicht zu bedienen und einfach in der Konstruktion. Die Geräuschisolierung zwischen benachbarten Kabinenelementen ist groß. Jede Kabine hat ihren eigenen Zugang, so daß eine weitgehende Unabhängigkeit der Bewohner gewährleistet ist.

Es ist aus Fig. 1 ersichtlich, daß durch die Zugänglichkeit von außen die innere Teilung einander gegenüberliegender Kabinenelemente durch die am Ende der Betten gelegenen, und mit diesen fest verbundenen Schränke vorgenommen wird. Im zusammengeschobenen Zustand entspricht die Gesamtbreite des Fahrzeuganhängers derjenigen der Länge der Etagenbetten mit hinzufügter Schranktiefe. Die ein Kabinenelement bildende Grundanordnung ist für alle Kabinen identisch aufgebaut und wird für einander gegenüberliegende Kabinenelemente jeweils um 180° gedreht montiert. Beim Zusammenschieben gleiten die Betten der jeweils gegenüberliegenden Kabinenelemente aneinander vorbei. Durch entsprechende Führungs- und Lagerelemente (Teleskopschienen, Laufrollen oder dergleichen) wird eine leichte Bedienbarkeit und eine sichere Führung gewährleistet. Verbleibende Schlitze zur Nachbarkabine oder nach außen werden durch entsprechende Dichtleisten verschlossen.

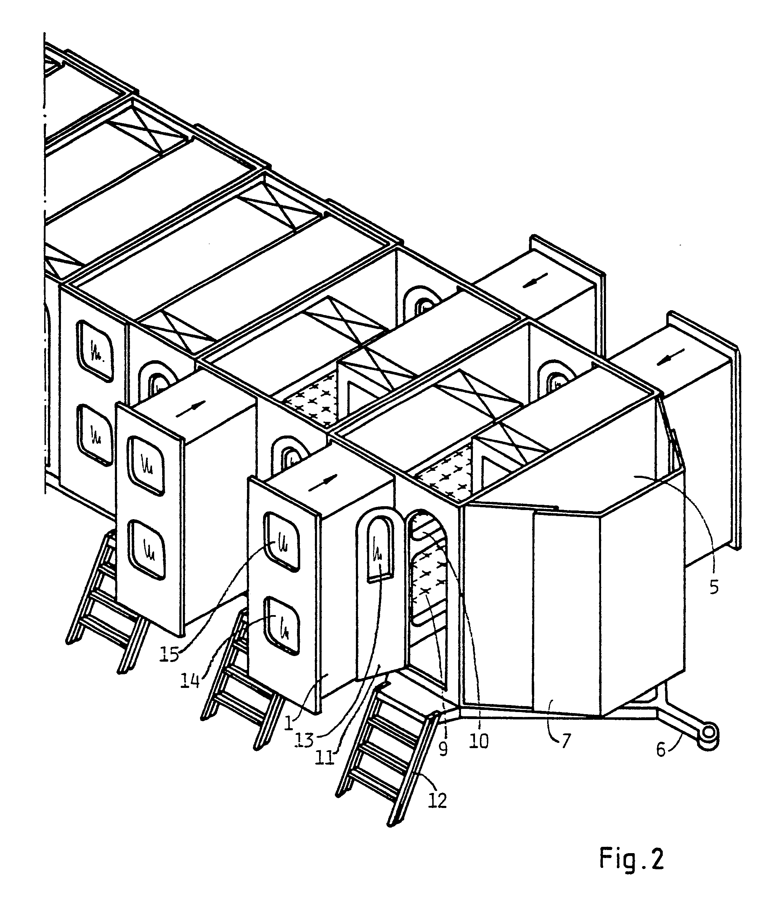

In Fig. 2 ist der Schlafanhänger gemäß Fig. 1 in perspektivischer Darstellung wiedergegeben, wobei das Dach aus Gründen der Übersichtlichkeit fortgelassen wurde. Die Darstellung zeigt, wie jeweils zwei Betten 1a und 1b übereinander leicht Platz finden. In die ausziehbaren Elemente 1, welche die Breite von Betten aufweisen und als quaderförmige Hohlkörper ausgebildet sind, sind Aussparungen 9 und 10 als Einstiegsöffnungen eingearbeitet. Sie haben eine Breite, die der Länge des Bereichs der Einheit angepaßt ist, der im auseinandergezogenen Zustand innerhalb der Grundkontur des Anhängers verbleibt.

Zwischen den ausziehbaren Teilen 1 der Kabinen sind Türen 11 angebracht, welche den individuellen Zugang zum Kabineninneren über eine Treppe 12 gestatten. Die Tür 11 und das Element 1 weisen Fenster 13 bzw. 14 und 15 auf, so daß das Kabineninnere eine gute Tagesbelichtung erfährt.

**Patentansprüche**

1. Transportable Unterkunft, insbesondere als Fahrzeugaufbau, mit Schlafkabinen und für den Transport verkleinerbaren Abmessungen, wobei die Schlafkabinen jeweils mindestens ein Bett (1a, 1b) und einen parallel dazu angeordneten Gangbereich umfassen und die Verkleinerung bei spiegelverkehrter Anordnung zweier einander benachbarter Kabinen durch schubladenartiges Einschieben eines das Bett umfassenden Kabinenelementes (1) in den Gangbereich erfolgt, dadurch gekennzeichnet, daß das Kabinenelement (1) in Längsrichtung des Bettes, um eine Länge ausziehbar ist, die kleiner als die Länge des Bettes (1a, 1b) ist, so daß innerhalb der Kontur der verkleinerten Unterkunft noch eine Zugangsöffnung durch den von der benachbarten Kabine freigemachten Gangbereich zu dem innerhalb des Kabinenelements befindlichen Bett verbleibt.

2. Unterkunft nach Anspruch 1, dadurch gekennzeichnet, daß das Kabinenelement (1) außerhalb der Kontur der verkleinerten Unterkunft bis auf verschließbare Fensteröffnungen (14, 15) vollständig abgeschlossen ist.

3. Unterkunft nach einem der vorangehenden Ansprüche, dadurch gekennzeichnet, daß nach zwei einander gegenüberliegenden Seiten herausziehbar jeweils Kabinenelemente (1) vorgesehen sind.

4. Unterkunft nach einem der vorangehenden Ansprüche, dadurch gekennzeichnet, daß am Bettende des ausziehbaren Kabinenelements (1) mindestens ein Fenster (14, 15) angebracht ist.

5. Unterkunft nach einem der vorangehenden Ansprüche, dadurch gekennzeichnet, daß ein Schrankteil für die gegenüberliegende Kabine jeweils am Ende des Bettes innerhalb des herausziehbaren Elements (1) vorgesehen ist.

6. Unterkunft nach einem der vorangehenden Ansprüche, dadurch gekennzeichnet, daß eine Zugangtür (11) im feststehenden, nicht ausziehbaren Teil der Kabine angeordnet ist.

**Claims**

1. Mobile accommodation, particularly in the form of a vehicle construction, having sleeping cabins and dimensions which can be reduced for transport, the sleeping cabins each comprising at least one berth (1a, 1b) and a passage area arranged parallel thereto, and, with two adjacent cabins arranged reversed in mirror-image, the reduction in size being effected by pushing a cabin element (1) comprising the berth into the passage area in a drawer-like manner, characterised in that the cabin element (1) can be pulled out in the longitudinal direction of the berth by a length which is shorter than the length of the berth (1a, 1b) so that inside the contours of the reduced accommodation, an access way still remains through the passage area cleared by the adjacent cabin to the berth situated inside the cabin element.

2. Accommodation according to claim 1, characterised in that outside the contours of the reduced accommodation, the cabin element (1) is completely closed except for closable window openings (14, 15).

3. Accommodation according to either one of the preceding claims, characterised in that cabin elements (1) are provided which can be pulled out towards two opposite sides.

4. Accommodation according to any one of the preceding claims, characterised in that at least one window (14, 15) is provided at the berth end of the pull-out cabin element (1).

5. Accommodation according to any one of the preceding claims, characterised in that a cupboard unit for the opposite cabin is provided in each case at the end of the berth inside the pull-out element (1).

6. Accommodation according to any one of the preceding claims, characterised in that an entrance door (11) is provided in the stationary, non-pull-out portion of the cabin.

**Revendications**

1. Cantonnement transportable, en particulier sous forme de carrosserie de véhicule, avec des cabines de couchage et des dimensions qui peuvent se réduire pour le transport, étant précisé que les cabines de couchage comportent chacune au moins un lit (1a, 1b) et un couloir disposé parallèlement à ce lit, et étant précisé que, dans le cas de la disposition de deux cabines voisines l'une de l'autre en symétrie inverse, la réduction des dimensions se fait par coulissement, à la façon d'un tiroir, d'un élément formant cabine (1), contenant le lit, dans le couloir, caractérisé en ce que l'élément formant cabine (1) peut être extrait, dans la direction longitudinale du lit, d'une longueur qui est plus petite que la longueur du lit (1a, 1b) de façon telle qu'il subsiste encore, à l'intérieur du contour du cantonnement de dimensions réduites, en passant par le couloir libéré par la cabine voisine, une ouverture d'accès au lit qui se trouve à l'intérieur de l'élément formant cabine.

2. Cantonnement selon la revendication 1, caractérisé en ce que l'élément formant cabine (1) est entièrement clos à l'extérieur du contour du cantonnement de dimensions réduites, à l'exception des ouvertures des fenêtres (14, 15) que l'on peut obturer.

3. Cantonnement selon l'une des revendications précédentes, caractérisé en ce qu'il est prévu que les éléments (1) formant cabine peuvent être respectivement extraits en direction de deux côtés opposés l'un de l'autre.

4. Cantonnement selon l'une des revendications précédentes, caractérisé en ce qu'à l'extrémité du lit de l'élément (1) formant cabine, qui peut être extrait, est rapportée au moins une fenêtre (14, 15).

5. Cantonnement selon l'une des revendications précédentes, caractérisé en ce qu'il est respectivement prévu, à l'extrémité du lit, à l'intérieur de l'élément (1) qui peut être extrait, une partie formant armoire pour la cabine située en face.

6. Cantonnement selon l'une des revendications précédentes, caractérisé en ce qu'un force d'accès (11) est disposée dans la partie fixe, ne pouvant pas être extraite, de la cabine.

1a, 1b

Fig.1

Fig.2